# EUROPÄISCHE PATENTSCHRIFT

(11) **EP 2 850 334 B1**
(45) Veröffentlichungstag und Bekanntmachung des Hinweises auf die Patenterteilung: **13.07.2016**
(21) Anmeldenummer: 13727075.7
(22) Anmeldetag: 21.05.2013
(51) Int. Cl.: F16D 65/56

(54) **VERSCHLEIßNACHSTELLVORRICHTUNG EINER SCHEIBENBREMSE UND ENTSPRECHENDE SCHEIBENBREMSE**
WEAR ADJUSTMENT DEVICE OF A DISC BRAKE AND CORRESPONDING DISC BRAKE
DISPOSITIF DE RATTRAPAGE DE L'USURE D'UN FREIN À DISQUE ET FREIN À DISQUE CORRESPONDANT

(30) Priorität: 18.05.2012 DE 102012009900
(43) Veröffentlichungstag der Anmeldung: 25.03.2015
(73) Patentinhaber: KNORR-BREMSE Systeme für Nutzfahrzeuge GmbH, 80809 München (DE)
(72) Erfinder: WEBER, Ralf, 80992 München (DE); EICHLER, Thomas, 80809 München (DE); HABERL-GÜNTHNER, Paul, 94474 Vilshofen (DE); NESMJANOWITSCH, Igor, 94491 Hengersberg (DE)
(86) Internationale Anmeldenummer: PCT/EP2013/060382
(87) Internationale Veröffentlichungsnummer: WO 2013/171342

(56) Entgegenhaltungen:
- EP-A2- 2 083 190
- WO-A1-2006/099938
- DE-A1-102004 037 771

## Beschreibung

Die Erfindung betrifft eine Verschleißnachstellvorrichtung einer Scheibenbremse, insbesondere für ein Kraftfahrzeug, nach dem Oberbegriff des Anspruchs 1. Die Erfindung bezieht sich auch auf eine entsprechende Scheibenbremse.

Fahrzeuge und bestimmte technische Geräte verwenden häufig Reibungsbremsen, um kinetische Energie umzuwandeln. Bevorzugt wird dabei speziell im Personenkraftwagen- und im Nutzfahrzeugbereich die Scheibenbremse. Bei der typischen Bauform einer Scheibenbremse besteht diese aus einem Bremssattel samt innerer Mechanik, aus in der Regel zwei Bremsbelägen und der Bremsscheibe. Auf die innere Mechanik werden über einen pneumatisch betätigten Zylinder die Zylinderkräfte eingeleitet, durch einen Exzentermechanismus verstärkt und als Zuspannkraft über Gewindespindeln auf Bremsbeläge und Bremsscheibe übertragen, wobei über die Gewindespindeln der Verschleiß von Bremsscheibe und Bremsbelägen ausgeglichen wird.

Die Zuspannkräfte wirken über beide Bremsbeläge auf die Bremsscheibe, welche in Abhängigkeit von der Höhe der Zuspannkraft eine Verzögerung der Rotationsbewegung erfährt. Diese Verzögerung wird maßgeblich vom Reibwert zwischen Bremsscheibe und Bremsbelag mitbestimmt. Da die Beläge konstruktiv als Verschleißteile ausgelegt werden und die Reibwerte abhängig von der Festigkeit sind, sind diese generell weicher als die Bremsscheibe, d.h. die Beläge erfahren über Ihre Gebrauchsdauer eine Änderung der Belagstärke, sie verschleißen. Aus dieser Belagstärkenänderung ergibt sich die Notwendigkeit, dass eine Verschleißnachstellung die Änderung ausgleicht und somit ein konstantes Luftspiel einstellt. Ein konstantes Luftspiel wird benötigt, um die Ansprechzeiten der Bremse klein zuhalten, die Freigängigkeit der Bremsscheibe zu gewährleisten und eine Hubreserve für Grenzbelastungsfälle vorzuhalten.

Ein Beispiel einer Verschleißnachstellvorrichtung beschreibt das Dokument DE 10 2004 037 771 A1. Dabei wird eine Antriebsdrehbewegung z.B. von einer Drehmoment-Begrenzungseinrichtung, beispielsweise mit einer Kugelrampe, über eine kontinuierlich wirkende Kupplung (Rutschkupplung) auf eine Verstellspindel eines Druckstempels weitergeleitet. Das Luftspiel wird dabei kontinuierlich eingestellt.

Das Dokument WO 2006/099938 A1 beschreibt eine Nachstellvorrichtung für eine pneumatisch betätigte Scheibenbremse, insbesondere zur Anordnung in einer Drehspindel, mit einer Überlastkupplung und einer Einwegdrehrichtungskupplung. Die Einwegdrehrichtungskupplung weist eine Wälzkörperkupplung sowie beidseits der Wälzkörperkupplung angeordnete Reibungskupplungen auf.

Wie beschrieben, entsteht funktionsbedingt Verschleiß an den Bremsbelägen, der über die Verschleißnachstelleinrichtung egalisiert werden soll. Beim bestehenden System liegt das Problem darin, dass es auf reibschlüssiger Basis und somit nur in engen Grenzen bzw. Temperatur- und Schwingungsabhängig funktioniert, d.h. es sind zusätzliche Maßnahmen zur Luftspielstabilisierung unter Temperatur- und Schwingungseinfluss notwendig.

Die Aufgabe der vorliegenden Erfindung besteht darin, eine verbesserte Verschleißnachstellvorrichtung zu schaffen.

Eine weitere Aufgabe ist, eine verbesserte Scheibenbremse bereitzustellen.

Die Aufgabe wird durch eine Verschleißnachstellvorrichtung mit den Merkmalen des Anspruchs 1, und eine Scheibenbremse mit den Merkmalen des Anspruchs 14 gelöst.

Es wird eine Verschleißnachstellvorrichtung bereitgestellt, welche einen kompakten Aufbau in einem Gehäuse aufweist und weitestgehend reibungsunabhängig ist, weitestgehend formschlüssig funktioniert

Eine erfindungsgemäße Verschleißnachstellvorrichtung zur Nachstellung eines Reibflächenverschleißes an Bremsbelag und Bremsscheibe einer Scheibenbremse, insbesondere für ein Kraftfahrzeug, mit einer Zuspannvorrichtung, vorzugsweise mit einem Drehhebel, wobei die Verschleißnachstellvorrichtung antriebsseitig mit der Zuspannvorrichtung, vorzugsweise mit dem Drehhebel, und abtriebsseitig mit einer Spindeleinheit der Scheibenbremse koppelbar ist, wobei axial beiderseits eines Antriebselementes jeweils eine Wälzkörperanordnung angeordnet ist, von denen eine als Wälzlager und eine als Kugelrampenkupplung ausgebildet ist, eine Zentralwelle, welche mit der Kugelrampenkupplung gekoppelt ist, und eine Abtriebsschnittstelle zur Kopplung mit der Spindeleinheit aufweist, ein Radialfreilauf, welcher mit der Kugelrampenkupplung über eine Überlastfedereinheit und mit der Zentralwelle gekoppelt ist, eine richtungsabhängige Drehmomenteinrichtung, und ein Gehäuse, in welchem das Antriebselement, die Wälzkörperanordnungen, die Überlastfedereinheit, der Radialfreilauf, die Zentralwelle und die richtungsabhängige Drehmomenteinrichtung angeordnet sind, vorgesehen sind.

Es ergibt sich ein in dem Gehäuse befindlicher kompakter und platzsparender Aufbau. Das Gehäuse hat außerdem eine Schutzfunktion vor Nässe und Schmutz.

Eine erfindungsgemäße Scheibenbremse, vorzugsweise druckluftbetätigt, insbesondere für ein Kraftfahrzeug, mit einer Zuspannvorrichtung, vorzugsweise mit einem Bremsdrehhebel, mindestens einer Spindeleinheit, und mindestens einer Verschleißnachstellvorrichtung, welche mit der Zuspannvorrichtung, vorzugsweise mit dem Bremsdrehhebel, gekoppelt ist, weist die oben angegebene Verschleißnachstellvorrichtung auf.

Weitere vorteilhafte Ausgestaltungen sind in den Unteransprüchen angegeben.

In einer Ausführung ist vorgesehen, dass die richtungsabhängige Drehmomenteinrichtung eine Rüttelsicherung bildet. Auf diese Weise ist eine integrierte Schwingungsstabilisierung gebildet.

Dazu ist weiterhin vorgesehen, dass die Verschleißnachstellvorrichtung durch die richtungsabhängige Drehmomenteinrichtung für eine diskontinuierliche Nachstellung ausgebildet ist. So ist auch eine integrierte Temperaturstabilisierung möglich.

In einer Ausführung weist die richtungsabhängige Drehmomenteinrichtung einen Momentenrampenabschnitt, der mit der Zentralwelle fest verbunden ist, eine Momentenrampenscheibe, die mit dem Momentenrampenabschnitt in Eingriff steht, und eine Zustellmomentenfeder umfasst, welche den Momentenrampenabschnitt und die Momentenrampenscheibe mit einer vorher festlegbaren axialen Vorspannkraft beaufschlagt. Da die Zustellung abhängig von geometrischen Größen ist, ist eine formschlüssige Funktion ermöglicht.

In einer weiteren Ausführung ist die Zustellmomentenfeder zwischen einem Bodenabschnitt des Gehäuses und der Momentenrampenscheibe angeordnet. Durch diesen kompakten Aufbau sind geringe Abmessungen möglich.

In einer noch weiteren Ausführung ist die richtungsabhängige Drehmomenteinrichtung zur Nachstellung mit flachen Zustellrampen und zur Verstellung im Servicefall mit in Bezug auf die flachen Zustellrampen steilen Verstellrampen ausgebildet ist, welche zumindest teilweise in Kontakt stehen. Das ergibt eine hohe Funktionalität auf engstem Raum. Die Drehmomenteinrichtung kann somit mehrer Funktionen erfüllen. In einer noch weiteren Ausführung ist das Axiallager aus dem Antriebselement, Axiallagerkugeln und einem Deckelabschnitt des Gehäuses gebildet. Das Gehäuse weist somit ebenfalls eine hohe Funktionalität auf und reduziert die Anzahl von Bauteilen.

Eine andere Ausführung sieht vor, dass die Zentralwelle einen Führungsabschnitt aufweist, welcher in dem Gehäuse axial festgelegt ist. Somit kann das Gehäuse eine hohe Funktionsintegration aufweisen.

Ein weiterer Vorteil, den das gemeinsame Gehäuse bildet, liegt darin, dass das Axiallager, die Kugelrampenkupplung, die Überlastfedereinheit und der Radialfreilauf zwischen dem Führungsabschnitt und dem Deckelabschnitt des Gehäuses angeordnet sind, wodurch sich eine bedeutender Platzersparnis ergibt.

In einer noch anderen Ausführung ist der Radialfreilauf als Federpaket ausgebildet ist und steht mit einer Freilaufverzahnung der Zentralwelle in Eingriff. Der Radialfreilauf kann auch radial gestapelte Federarme aufweisen. Dadurch kann in Sperrrichtung eine gegenseitige Abstützung erzielt werden, wobei in Löserichtung ein definiertes Freilaufmoment einstellbar ist.

In einer weiteren Ausführung ist das Gehäuse mit mindestens einer Sattelverdrehfixierung und/oder einem Verdrehfixierelement ausgebildet ist. So ergibt sich ein großer Einsatzbereich bei unterschiedlichen Bremskonfigurationen.

In einer noch weiteren Ausführung weist die Kugelrampenkupplung Überlastrampenkugeln auf, die in einem Kugelkäfig zwangsgeführt sind und zwischen dem Antriebselement und einem Überlastrampenelement angeordnet sind. Das ergibt einen raumsparenden Aufbau, wobei unter verschiedenen Lastfällen ein Gleichlauf dieser Kugeln ermöglicht wird.

Eine Scheibenbremse mit zwei Spindeleinheiten und einer Synchroneinheit kann so ausgebildet sein, dass die Verschleißnachstellvorrichtung auf oder in die eine der beiden Spindeleinheiten der Scheibenbremse eingesetzt ist. Dies ist dadurch möglich, dass die Verschleißnachstellvorrichtung sowohl in Außen- als auch in Innenbauweise (in oder um eine Gewindespindel herum) ausgeführt ist.

Die erfindungsgemäße Verschleißnachstellvorrichtung weist die folgenden Vorteile auf:
- Integrierte "Schwingungsstabilisierung" (Rüttelsicherung)
- Zustellung abhängig von geometrischen Größen → formschlüssig
- weitestgehend temperaturunempfindlich
- Zustellung ist diskontinuierlich
- Ausführung in Außen- oder Innenbauweise (in oder um eine Gewindespindel)
- Funktionsmomente sind einstellbar
- Deutlich kürzere Bauweise als der Stand der Technik

Die Erfindung wird nun anhand beispielhafter Ausführungen mit Bezug auf die beigefügten Zeichnungen näher erläutert. Hierbei zeigen:
- Fig. 1: eine schematische Schnittansicht eines Ausführungsbeispiels einer erfindungsgemäßen Scheibenbremse;
- Fig. 2 und 2a: schematische, perspektivische Explosionsdarstellungen eines Ausführungsbeispiels einer erfindungsgemäßen Verschleißnachstellvorrichtung aus verschiedenen Blickwinkeln;
- Fig. 3 - 10: schematische, perspektivische Darstellungen der Bauteile des Ausführungsbeispiels nach Fig. 2 und 2a;
- Fig. 11: eine schematische, perspektivische Darstellung einer Zentralwelle mit einem Radialfreilauf;
- Fig. 11a: eine Querschnittsdarstellung einer Ebene des Radialfreilaufs;
- Fig. 12: eine schematische Schnittansicht von Rampen;
- Fig. 13: eine schematische Schnittdarstellung der erfindungsgemäßen Verschleißnachstellvorrichtung;
- Fig. 14: eine schematische Perspektivansicht der erfindungsgemäßen Verschleißnachstellvorrichtung nach Fig. 13;
- Fig. 15: eine schematische Schnittdarstellung einer Variante der erfindungsgemäßen Verschleißnachstellvorrichtung;
- Fig. 16: eine schematische Perspektivansicht der Variante nach Fig. 15;
- Fig. 17: eine schematische Teilansicht eines zweiten Ausführungsbeispiels der erfindungsgemäßen Scheibenbremse;
- Fig. 18: eine vergrößerte Perspektivansicht der erfindungsgemäßen Verschleißnachstellvorrichtung nach Fig. 13 an der Scheibenbremse nach Fig. 17; und
- Fig. 19: eine vergrößerte Perspektivansicht der erfindungsgemäßen Verschleißnachstellvorrichtung nach Fig. 15 an der Scheibenbremse nach Fig. 17.

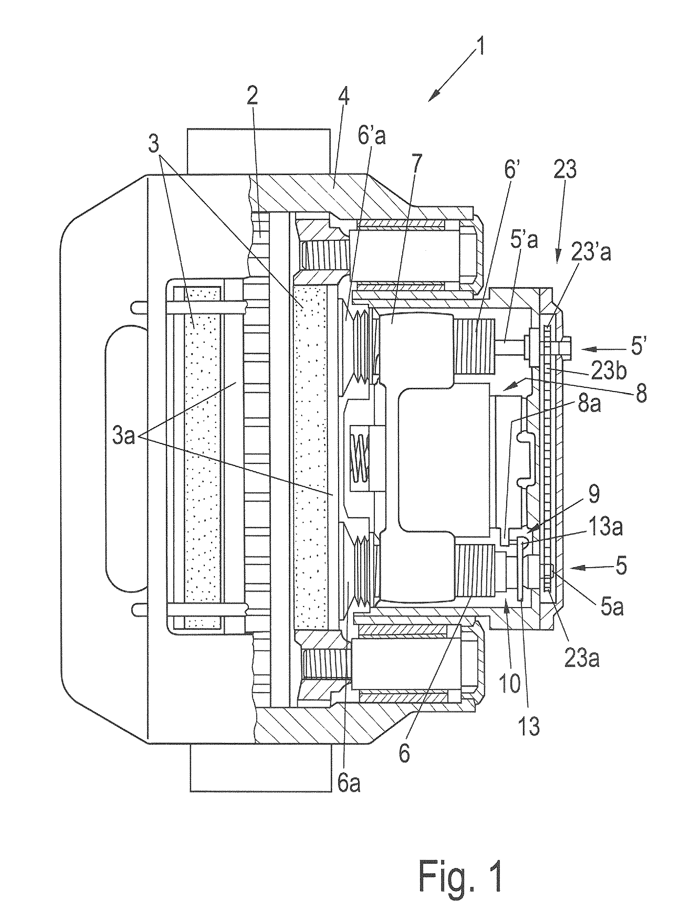

Fig. 1 zeigt eine schematische Schnittansicht eines Ausführungsbeispiels einer erfindungsgemäßen Scheibenbremse 1.

Die Scheibenbremse 1 ist hier in einer Ausführung als zweistempelige Bremse mit zwei Spindeleinheiten 5, 5' mit Gewinderohren 6, 6' gezeigt. Ein Bremssattel 4, hier als Schwimmsattel ausgeführt, übergreift eine Bremsscheibe 2, an welcher beidseitig jeweils ein Bremsbelag 3 mit Bremsbelagträger 3a angeordnet ist. Der zuspannseitige Bremsbelagträger 3a steht mit den Spindeleinheiten 5, 5' an Enden der Gewinderohre 6, 6' über Druckstücke 6a, 6'a in Verbindung. Der andere, reaktionsseitige Bremsbelagträger 3a ist auf der anderen Seite der Bremsscheibe im Bremssattel 4 festgelegt. Die Gewinderohre 6, 6' sind jeweils in einer Traverse 7 verdrehbar angeordnet. Die Traverse 7 und somit die Gewinderohre 6, 6' sind von einer Zuspannvorrichtung, hier ein Drehhebel 8 mit einer Schwenkachse rechtwinklig zur Drehachse, der Bremsscheibe 2 betätigbar. Die Verschleißnachstellvorrichtung 10 ist hier in die eine Spindeleinheit 5 der beiden Spindeleinheiten 5, 5' auf einer Nachstellerwelle 5a eingesetzt. Die Nachstellerwelle 5a ist über eine Synchroneinrichtung 23 mit einer Mitnehmerwelle 5'a, die in die andere Spindeleinheit 5' eingesetzt ist, gekoppelt. Die Synchroneinrichtung 23 umfasst hier ein Synchronrad 23a (hier ein Kettenrad) auf dem zuspannseitigen Ende der Nachstellerwelle 5a der Verschleißnachstellvorrichtung 10, ein Synchronrad 23'a (hier ein Kettenrad) auf dem entsprechenden Ende der Mitnehmerwelle 5'a und ein Synchronmittel 23b, hier eine Kette. Damit ist eine synchrone Bewegung der Spindeleinheiten 5 und 5' bei Verschleißnachstellvorgängen gewährleistet.

Die Verschleißnachstellvorrichtung 10 steht über einen Antrieb 9 mit dem Drehhebel 8 in Zusammenwirkung. Der Antrieb 9 umfasst einen Betätiger 8a, welcher mit dem Drehhebel 8 verbunden ist, und eine Schaltnase 13a eines Antriebselementes 13 der Verschleißnachstellvorrichtung 10.

Ein Abstand zwischen den Bremsbelägen 3 und der Bremsscheibe 2 wird als Lüftspiel bezeichnet. Infolge von Belag- und Scheibenverschleiß wird dieses Lüftspiel größer. Wenn dies nicht kompensiert wird, kann die Scheibenbremse 1 ihre Spitzenleistung nicht erreichen, da ein Betätigungshub der Betätigungsmechanik, d.h. hier der Betätigungshub bzw. ein Schwenkwinkel des Drehhebels 8, nicht mehr ausreicht.

Die Scheibenbremse 1 kann unterschiedliche Kraftantriebe aufweisen. Der Drehhebel 8 wird hier z.B. pneumatisch betätigt. Zu Aufbau und Funktion einer pneumatischen Scheibenbremse 1 wird auf die entsprechende Beschreibung der DE 197 29 024 C1 verwiesen.

Die erfindungsgemäße Verschleißnachstellvorrichtung 10, die unten noch ausführlich beschrieben wird, ist zur Verschleißnachstellung eines vorher festgelegten Lüftspiels, das als Nominallüftspiel bezeichnet wird, ausgebildet. Unter dem Begriff "Nachstellung" ist eine Lüftspielverkleinerung zu verstehen. Das vorher festgelegte Lüftspiel ist durch die Geometrie der Scheibenbremse 1 bestimmt und weist ein so genanntes konstruktives Lüftspiel auf. Mit anderen Worten, die Verschleißnachstellvorrichtung 10 verkleinert ein vorhandenes Lüftspiel, wenn dieses in Bezug auf ein das vorher festgelegte Lüftspiel zu groß ist.

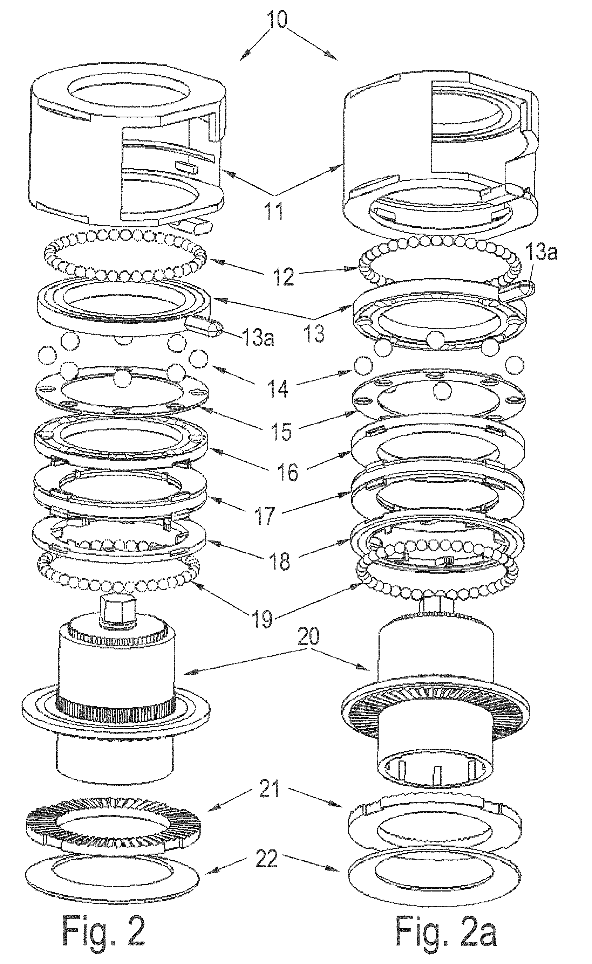

Fig. 2 und 2a zeigen schematische, perspektivische Explosionsdarstellungen eines Ausführungsbeispiels der erfindungsgemäßen Verschleißnachstellvorrichtung 10 aus verschiedenen Blickwinkeln.

Die Verschleißnachstellvorrichtung 10 umfasst ein Gehäuse 11, Axiallagerkugeln 12, das Antriebselement 13 mit der Schaltnase 13a, Überlastrampenkugeln 14 mit einem Kugelkäfig 15, ein Überlastrampenelement 16, eine Überlastfedereinheit 17, einen Radialfreilauf 18, Freilaufkugeln 19, eine Zentralwelle 20, eine Momentenrampenscheibe 21 und eine Zustellmomentenfeder 22.

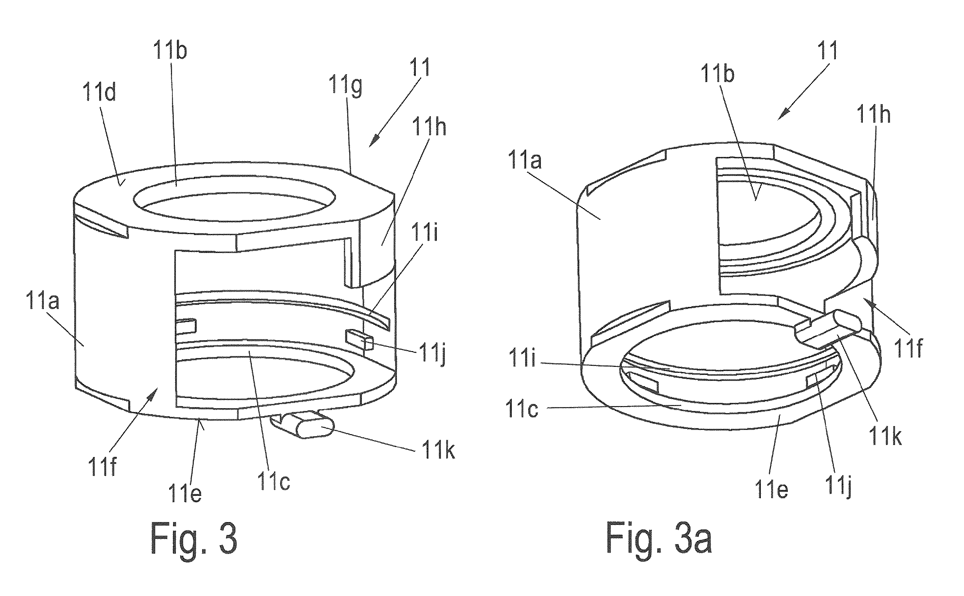

Die Funktionsbauteile der Verschleißnachstellvorrichtung 10 des Ausführungsbeispiels nach Fig. 2 und 2a werden nun im Zusammenhang mit schematische, perspektivische Darstellungen der Bauteile der Figuren 3 bis 10 beschrieben.

Unter dem Begriff Oberseite ist die Seite des jeweiligen Bauteils zu verstehen, welche im eingebauten Zustand in der Scheibenbremse 1 zur Zuspannseite weist. Die Unterseite des jeweiligen Bauteils weist dann zur Bremsscheibe 2.

In Fig. 3 und 3a ist das Gehäuse 11 gezeigt. Es weist einen im Wesentlichen hohlzylindrischen Körper mit einer umlaufenden Wand 11a auf, die auf ca. einem Viertel des Umfangs von einer Wandöffnung 11f durchbrochen ist und oben mit einem Deckelabschnitt 11d mit einer kreisrunden Öffnung 11b abgedeckt ist. An der Unterseite des Gehäuses 11 ist ein parallel zum Deckelabschnitt 11d liegender Bodenabschnitt 11 e angeordnet, der ebenfalls eine kreisrunde Öffnung 11 c aufweist. An einer Seite der Wandöffnung 11f benachbart ist das Gehäuse 11 abgeflacht, wobei eine Satteldrehfixierung 11g gebildet ist, mit welcher die Verschleißnachstellvorrichtung 10 über das Gehäuse 11 in dem Bremssattel 4 verdrehsicher fixiert werden kann.

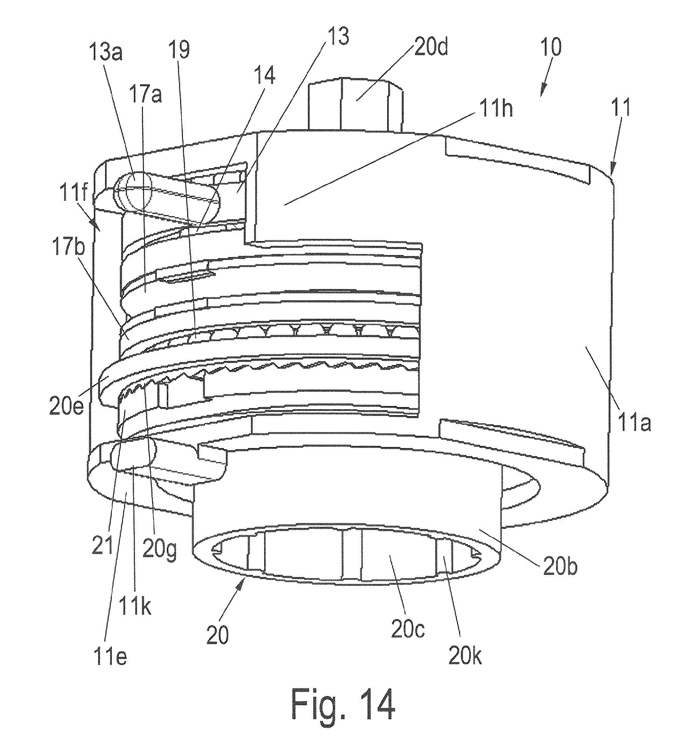

Die Wandöffnung 11f ist hier auf ihrer rechten Seite, hier im oberen recht Viertel, mit einem Anschlag 11 h für die Schaltnase 13a (siehe auch Fig. 14) teilweise verschlossen.

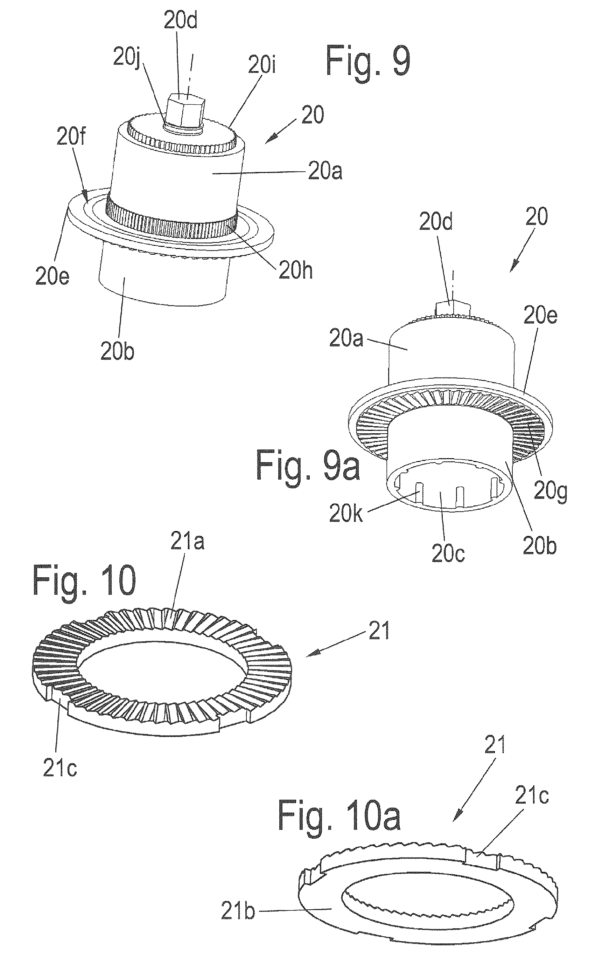

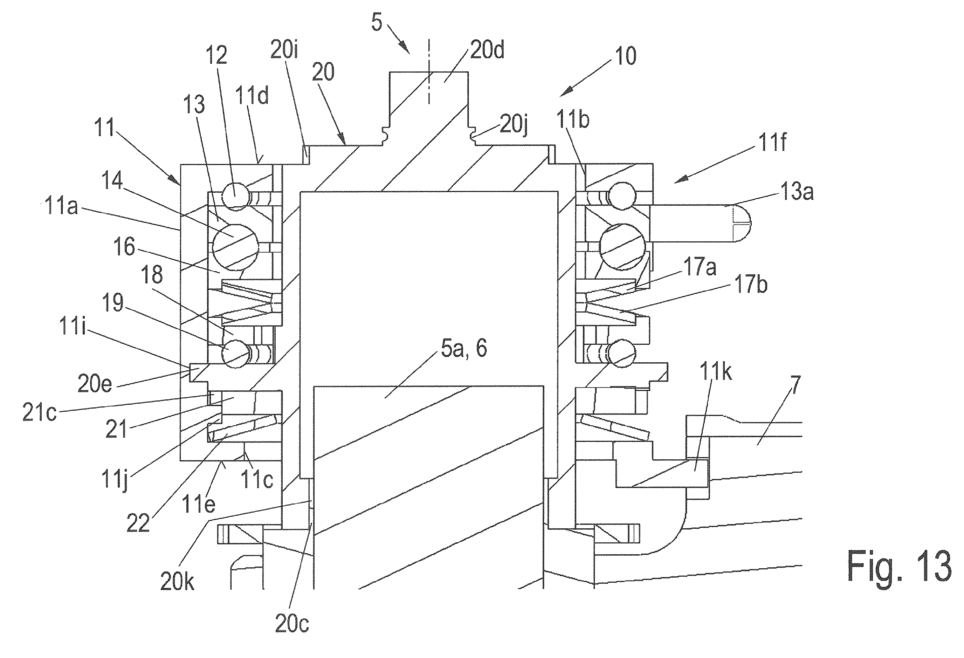

Innerhalb des Gehäuses 11 an der Innenseite Wand 11 a ist eine Führungsnut 11 i eingeformt, welche zur Aufnahme eines Führungsabschnitts 20e (Fig. 9; 13) der Zentralwelle 20 dient. Unterhalb der Führungsnut 11 i sind an der Innenseite der Wand 11a Verdrehsicherungselemente 11j in Form von in Umfangsrichtung sich erstreckenden länglichen Vorsprüngen angeformt. Die Verdrehsicherungselemente 11j dienen in Zusammenwirkung mit Sicherungsnuten 21 c zur verdrehsicheren Fixierung der Momentenrampenscheibe 21 (siehe Fig. 10) im Gehäuse 11.

An der inneren Unterseite des Deckelabschnitts 11d ist eine nicht näher bezeichnete Axiallagerlaufbahn für die Axiallagerkugeln 12 eingeformt (siehe auch Fig. 13).

Schließlich ist an dem Unterbodenabschnitt 11 e unterhalb der Wandöffnung 11f ein sich radial nach außen erstreckendes Verdrehfixierelement 11 k in Zungenform angeformt. Es dient zur Verdrehsicherung des Gehäuses 11 in einer korrespondierenden Aufnahme der Traverse 7 (siehe Fig. 13; 17; 18).

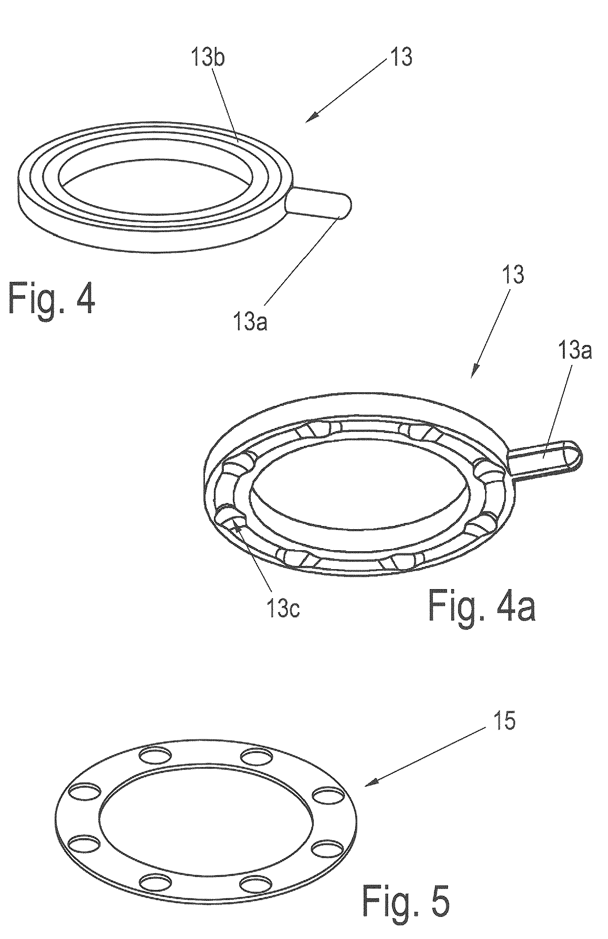

Das Antriebselement 13 ist in Fig. 4 und Fig. 4a dargestellt. Es weist einen Kreisringkörper auf, an welchen die Schaltnase 13a in Stiftform angebracht ist. Die Schaltnase 13a erstreckt sich vom äußeren Umfang des Kreisringkörpers radial nach außen. In die Oberseite des Kreisringkörpers des Antriebselementes 13 (Fig. 4) ist eine Axiallagerlaufbahn 13b für die Axiallagerkugeln 12 eingeformt. Und in die Unterseite des Antriebselementes 13, die in Fig. 4a dargestellt ist, ist eine Überlastrampenlaufbahn 13c für die Überlastrampenkugeln 14 eingeformt.

Fig. 5 zeigt den Kugelkäfig 15, welcher hier für acht Überlastrampenkugeln 14 vorgesehen ist. Natürlich kann er für mehr oder auch weniger Überlastrampenkugeln 14 ausgebildet sein.

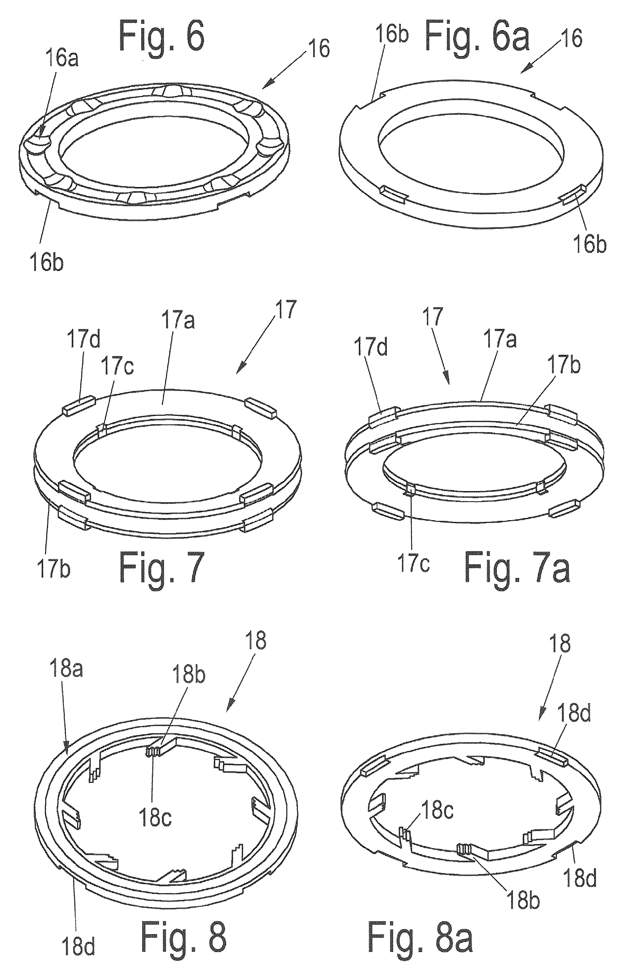

In Fig. 6 und 6a ist das Überlastrampenelement 16 dargestellt. Es ist kreisringförmig ausgebildet und weist an seiner Oberseite (Fig. 6) eine Überlastrampenlaufbahn 16a (korrespondierend zu der Überlastrampenlaufbahn 13c) für die Überlastrampenkugeln 14 auf. Am Randumfang der in Fig. 6a gezeigten Unterseite des Überlastrampenelementes 16 sind hier vier Federfixiernuten 16b eingeformt, welche zur Fixierung der Überlastfedereinheit 17 (Fig. 7-7a) dienen.

Die Überlastfedereinheit 17 ist in Fig. 7 und Fig. 7a gezeigt und umfasst hier zwei mit ihren Innenöffnungen aufeinander angeordnete Feder 17a und 17b, die als Tellerfedern ausgebildet sind. Die Überlastfedereinheit 17 ist als Federpakte ausgeführt, wobei die beiden Tellerfedern an ihren Innenöffnungen über Paketverbindungen 17c miteinander verbunden sind. An den äußeren Umfangsrändern sind die Federn 17a und 17b jeweils mit vier Fixiervorsprüngen 17d versehen. Die Fixiervorsprünge 17d der oberen Feder 17a sind zur Zusammenwirkung mit den Federfixiernuten 16b des Überlastrampenelementes 16 vorgesehen, wobei die Fixiervorsprünge 17d der unteren Feder 17b mit dem in Fig. 8 und Fig. 8a gezeigten Radialfreilauf 18 zusammenwirken.

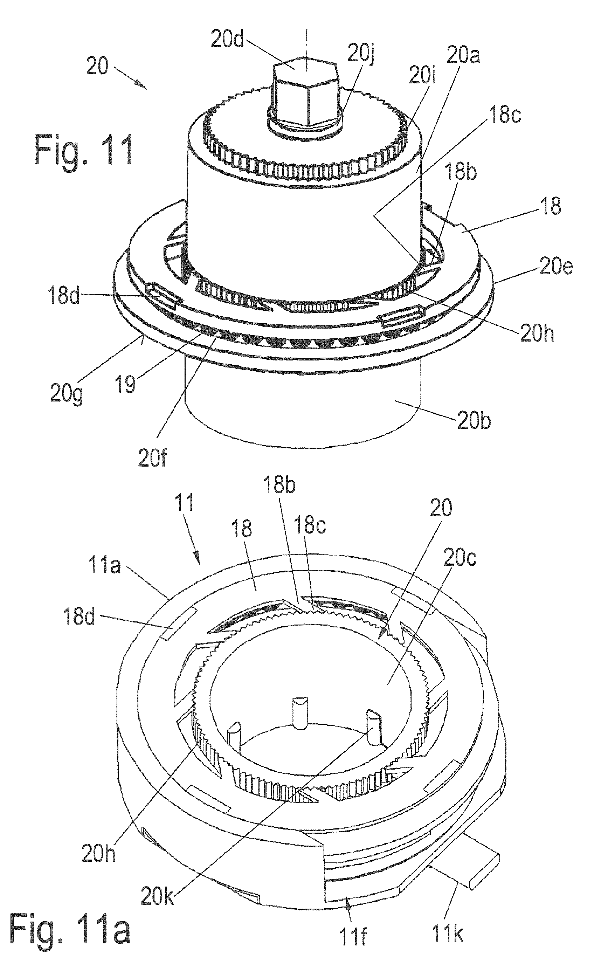

Der Radialfreilauf 18, der in Fig. 8 mit seiner Unterseite und in Fig. 8a mit seiner Oberseite dargestellt ist, ist ebenfalls kreisringförmig gestaltet. An seiner Unterseite ist eine Freilaufaxiallagerlaufbahn 18a für die Freilaufkugeln 19 eingeformt. An Rand des Umfangs der Innenöffnung des Radialfreilaufs 18 sind hier acht sich radial schräg nach innen erstreckende Freilauffedern 18b angeformt, welche an ihren freien Enden eine Profilierung 18c aufweisen. Die Profilierung 18c ist hier zahnförmig ausgebildet und zur Zusammenwirkung mit einer Freilaufverzahnung 20h der Zentralwelle 20 (siehe Fig. 9; 11 und 11a) vorgesehen. Am äußeren Umfangsrand der Oberseite des Radialfreilaufs 18 (Fig. 8a) sind hier vier Federfixiernuten 18d für die Fixierung der Fixiervorsprünge 17d der unteren Feder 17b der Überlastfedereinheit 17 eingeformt.

Fig. 9 zeigt die Zentralwelle 20 von ihrer Oberseite aus gesehen. Eine Ansicht von der Unterseite der Zentralwelle 20 ist in Fig. 9a dargestellt. In diesem Ausführungsbeispiel ist die Zentralwelle 20 ein Hohlzylinder mit kreisrundem Querschnitt. Der Hohlzylinder weist einen oberen Antriebsabschnitt 20a und einen unteren Abtriebsabschnitt 20b mit einer Abtriebsschnittstelle 20c mit Abtriebselementen 20k an der

Innenwand auf. Der Antriebsabschnitt 20a ist an seiner Oberseite geschlossen und mit einem scheibenartigen Zahnkranz versehen, welcher eine Sensorverzahnung 20i aufweist. Mittig auf der verschlossenen Oberseite des Antriebsabschnitts 20a der Zentralwelle 20 ist hier ein Sechskantzapfen als Verstellschnittstelle 20d in Axialrichtung angebracht. Die Verstellschnittstelle 20d dient zum Ansetzen eines Werkzeugs, z.B. ein Sechskantschlüssel, zur manuellen Verstellung der Verschleißnachstellvorrichtung 10, was unten näher erläutert wird. An der Übergangsstelle zwischen dem Sechskantzapfen und dem Antriebsabschnitt 20a ist eine Dichtringnut 20j zur Aufnahme eines Dichtrings, z.B. ein Rundschnurdichtring (O-Ring), zur Abdichtung gegenüber dem Bremssattel 4 eingeformt.

Die beiden Abschnitte 20a und 20b sind durch einen scheibenartigen Führungsabschnitt 20e unterteilt, dessen Außendurchmesser in diesem Beispiel etwa ein Drittel größer als der Außendurchmesser der beiden Abschnitte 20a und 20b ist. Außerdem ist der Außendurchmesser des Führungsabschnitts 20e größer als der Innendurchmesser des Gehäuses 11 (siehe Fig. 13), wobei ein Einbau durch die Wandöffnung 13f erfolgt.

An seiner ringförmigen Oberseite ist der Führungsabschnitt 20e mit einer Freilaufaxiallagerlaufbahn 20f für die Freilaufkugeln 19 versehen, wobei in die Unterseite des Führungsabschnitts 20e ein Momentenrampenabschnitt 20g zur Zusammenwirkung mit der Momentenrampenscheibe 21 nach Fig. 10 und 10a ein- und/oder angeformt ist.

Die Abtriebsschnittstelle 20c dient zur Verbindung mit einem oberen Ende der Nachstellerwelle 5, welches axiale Nuten aufweist, die mit den Abtriebselementen 20k korrespondieren. So kann die zusammengebaute Verschleißnachstellvorrichtung 10 drehfest auf die Nachstellerwelle 5a aufgesetzt werden, was unten noch beschrieben wird.

Fig. 10 zeigt die Oberseite der Momentenrampenscheibe 21 und Fig. 10a deren Unterseite. Die Momentenrampenscheibe 21 ist kreisringförmig gestaltet und an ihrer Oberseite mit Momentenrampen 21 a versehen, die mit dem Momentenrampenabschnitt 20g der Zentralwelle 20 zusammenwirken. Am Außenumfang der Momentenrampenscheibe 21 sind hier vier von der Unterseite zur Oberseite durchgehende Sicherungsnuten 21 c eingeformt, welche mit den Verdrehsicherungselementen 11j an der Innenseite der Wand 11 a des Gehäuses 11 zusammenwirken.

Fig. 11 zeigt eine schematische, perspektivische Darstellung der Zentralwelle 20 mit dem Radialfreilauf 18. In Fig. 11 a ist eine Querschnittsdarstellung einer Ebene des Radialfreilaufs 18 gezeigt.

Auf der Freilaufaxiallagerlaufbahn 20g des Führungsabschnitts 20e sind die Freilaufkugeln 19 angeordnet und tragen den Radialfreilauf 18. Der Radialfreilauf 18 ist so über den Antriebsabschnitt 20a der Zentralwelle 20 auf die Freilaufkugeln 19 augesetzt, dass die Profilierungen 18c der Freilauffedern 18b in Eingriff mit den Zähnen der Freilaufverzahnung 20h der Zentralwelle 20 stehen.

In der Querschnittsdarstellung nach Fig. 11 a ist eine Draufsicht auf diese Anordnung auf die Oberseite des Radialfreilaufs 18 im eingebauten Zustand in dem Gehäuse 11 zu sehen. Hierbei ist zu erkennen, dass die Wandöffnung 11f so groß bemessen ist, dass die Zentralwelle 20 mit Führungsabschnitt 20e durch die Wandöffnung 11f in die (hier nicht sichtbare Führungsnut 11 i einsetzbar ist, wodurch die Zentralwelle 20 mit den auf und an ihr angeordneten Funktionsbauteilen axial in dem Gehäuse 11 fixiert ist.

Die Freilauffedern 18b sind hier so geschrägt angeordnet, dass eine Drehbewegung der Zentralwelle 20 (um ihre nicht gezeigte, aber leicht vorstellbare Längsachse) hier in der Draufsicht im Uhrzeigersinn relativ zu dem Radialfreilauf 18 möglich ist. Im Gegenuhrzeigersinn sind die Zentralwelle 20 und der Radialfreilauf 18 über die mit der Freilaufverzahnung 20h in Eingriff stehenden Profilierungen 18c der Freilauffedern 18b formschlüssig drehfest verbunden, so dass keine Relativdrehbewegung zwischen Zentralwelle 20 und Radialfreilauf möglich ist. Die weiteren Funktionen des Radialfreilaufs 18 im Zusammenhang mit der Verschleißnachstellvorrichtung 10 werden unten noch im Detail beschrieben.

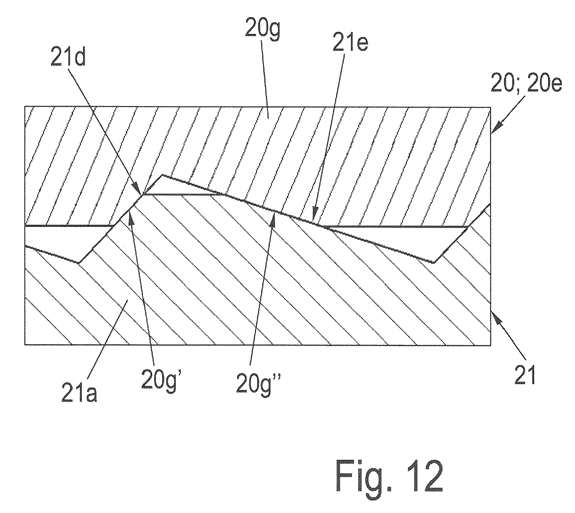

Fig. 12 zeigt eine schematische Schnittansicht von Rampen des Rampenabschnitts 20g des Führungsabschnitts 20e der Zentralwelle 20 im zusammengebauten Zustand in Zusammenwirkung mit den Momentenrampen 21 a der Momentenrampenscheibe 21. Der Rampenabschnitt 20g der Zentralwelle 20 steht in Eingriff mit den Momentenrampen 21 a der Momentenrampenscheibe 21, wobei steile Rampen und weniger steile Rampen miteinander in Kontakt stehen, dergestalt, dass steile Verstellrampen 21 d der Momentenrampenscheibe 21 mit steilen Verstellrampen 20g' der Zentralwelle 20 aneinanderliegen, und dass weniger steile Zustellrampen 21 e der Momentenrampenscheibe 21 mit weniger steilen Verstellrampen 20g" der Zentralwelle 20 aneinanderliegen. Hierbei liegen die Rampen jeweils nur teilweise aneinander. Z.B. liegen die Verstellrampen 21 d und 20g' etwa nur zur Hälfte ihrer Rampenlängen im Bereich ihrer Kopfseiten aneinander. In der Darstellung in Fig. 12 bilden die Rampen im Schnitt eine Art Zahnprofil. Die Funktion der unterschiedlichen Steigungen der Rampen wird weiter unten noch erläutert.

Fig. 13 zeigt eine schematische Schnittdarstellung der erfindungsgemäßen Verschleißnachstellvorrichtung 10, und in Fig. 14 ist eine schematische Perspektivansicht der erfindungsgemäßen Verschleißnachstellvorrichtung nach Fig. 13 dargestellt.

Die Zentralwelle 20 ist in dem Gehäuse 11 derart eingesetzt, dass die Oberseite des Antriebsabschnitts 20a mit der Verstellschnittstelle 20d durch die Öffnung 11 b des Deckelabschnitts 11 d des Gehäuses 11 hervorsteht und der Deckelabschnitt 11 d des Gehäuses 11 mit der Oberseite des Antriebsabschnitts 20a fluchtet. Der Abtriebsabschnitt 20b erstreckt sich durch die Öffnung des Bodenabschnitts 11 e des Gehäuses 11. Die Funktionsbauteile der Verschleißnachstellvorrichtung 10 sind in dem Gehäuse 11 in der folgenden Reihenfolge von oben ausgehend angeordnet.

Zwischen der Unterseite des Deckelabschnitts 11 d des Gehäuses und der Oberseite des Antriebselementes 13 ist ein Axiallager mit den Axiallagerkugeln 12 gebildet. Die Unterseite des Antriebselementes 13 liegt auf den Überlastrampenkugeln 14, die im Kugelkäfig 15 gehalten und auf der Oberseite des Überlastelementes 16 geführt sind. Die Unterseite des Überlastelementes 16 liegt auf der oberen Feder 17a der Federeinheit 17 auf und ist mit ihr über die Fixiervorsprünge 17d in den Federfixiernuten 16b verdrehfest gekoppelt. Die untere Feder 17b liegt auf der Oberseite des Radialfreilaufs 18 auf und ist mit diesem über ihre Fixiervorsprünge 17d in dessen Federfixiernuten 18d drehfest verbunden. Der Radialfreilauf 18 liegt mit seiner Unterseite auf den Freilaufkugeln 19, die ihrerseits auf der Oberseite des Führungsabschnitts 20e der Zentralwelle 20 geführt sind. Die Freilauffeder 18b, hier auch als Federpakete bezeichnet, stehen mit der Freilaufverzahnung 20h der Zentralwelle 20 in Eingriff, wie bereits oben beschrieben ist.

Der Führungsabschnitt 20e ist in der Führungsnut 11 i des Gehäuses 11 aufgenommen. Unterhalb des Führungsabschnitts 20e ist die Momentenrampenscheibe 21 angeordnet und steht durch Federkraft der Zustellmomentenfeder 22 mit den Momentenrampen 21 a ihrer Oberseiten mit dem Momentenrampenabschnitt 20g des Führungsabschnitts 20e der Zentralwelle 20 in Eingriff. Die Zustellmomentenfeder 22 ist zwischen der Unterseite der Momentenrampenscheibe 21 und der Innenseite des Bodenabschnitts 11e des Gehäuses angeordnet und übt so eine axiale Vorspannung durch Abstützung am Bodenabschnitt 11 e gegen die Momentenrampenscheibe 21 aus. Die Momentenrampenscheibe 20g ist in dem Gehäuse 11 drehfest über den Eingriff der Verdrehsicherungselemente 11j der Innenseite des Gehäuses 11 in den Sicherungsnuten 21 c festgelegt, jedoch axial verschiebbar, da die Sicherungsnuten 21 c axial durchgängig von der Oberseite zur Unterseite am Umfangsrand der Momentenrampenscheibe 20g ausgebildet sind.

In Fig. 13 ist die Verschleißnachstellvorrichtung 10 mit der Abtriebsschnittstelle 20c auf dem oberen Ende der Nachstellwelle 5a bzw. eines Gewinderohres 6 aufgesetzt und über die Abtriebselemente 20k drehfest mit der Nachstellewelle 5a gekoppelt. Gegenüber der Traverse 7 ist die Verschleißnachstellvorrichtung 10 mit dem Verdrehfixierelement 11 k in einer nicht näher bezeichneten Aufnahme gegen Verdrehen fixiert.

Fig. 14 zeigt die Verschleißnachstellvorrichtung 10 perspektivisch von unten gesehen, wobei der Anschlag 11 h in der Wandöffnung 11f deutlich zu erkennen ist. Der Anschlag 11 h liegt in der Schwenkebene der Schaltnase 13a. Der Anschlag 11 h dient als Anschlag für die Schaltnase 13a, wobei diese zwischen der linken oberen Kante der Wandöffnung 11f und dem Anschlag 11 h (deutlich zu erkennen in Fig. 14) um eine Längsachse des Gehäuses 11 und somit um eine (nicht gezeigte, aber leicht vorstellbare) Längsachse der Verschleißnachstellvorrichtung 10 verschwenkbar ist. Das Gehäuse 11 nimmt alle Funktionsbauteile der Verschleißnachstellvorrichtung 10 in einer kompakten Bauweise auf und schützt diese entsprechend.

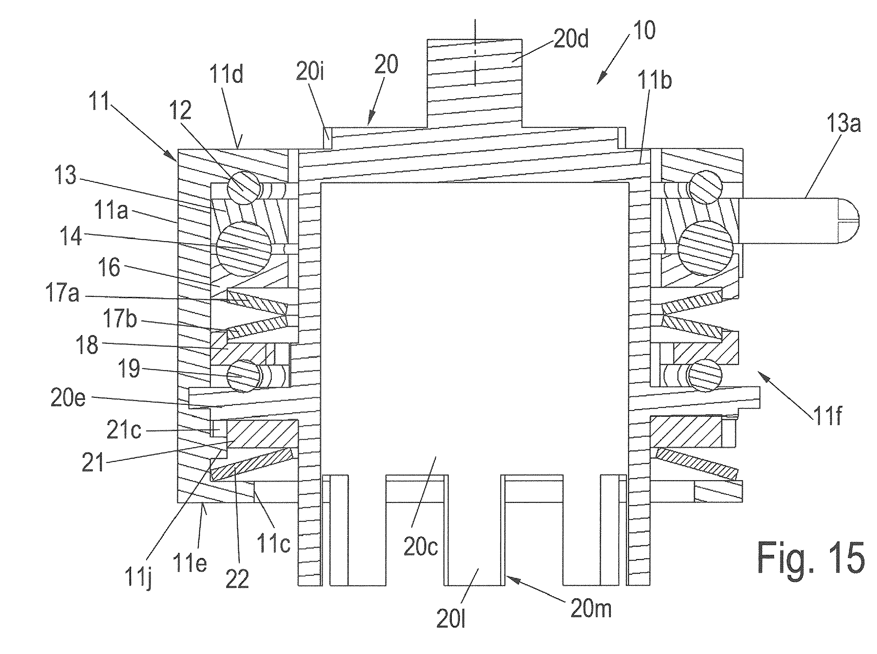

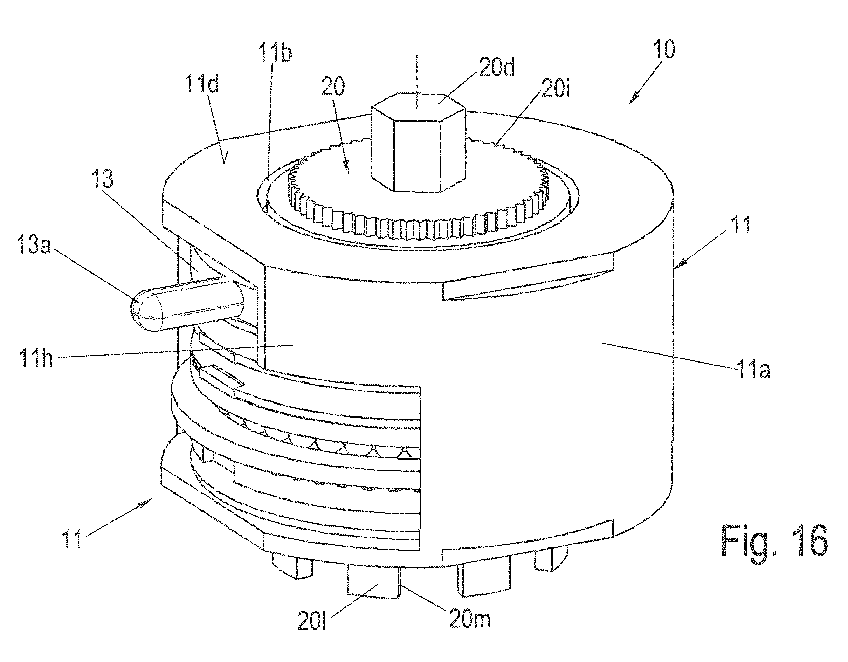

Fig. 15 zeigt eine schematische Schnittdarstellung einer Variante der erfindungsgemäßen Verschleißnachstellvorrichtung 10, und Fig. 16 zeigt eine schematische Perspektivansicht der Variante nach Fig. 15.

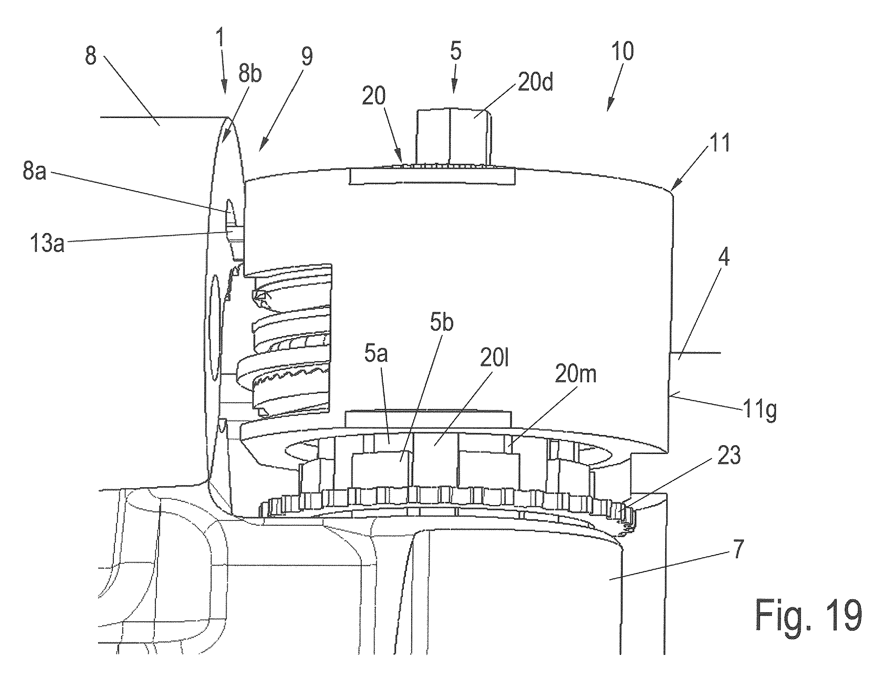

Die Variante nach Fig. 15 unterscheidet sich von der Ausführung nach Fig. 13 darin, dass das Gehäuse 11 kein Verdrehfixierelement 11 k aufweist. Eine Verdrehsicherung besteht darin, dass die Sattelverdrehfixierung 11g mit zugehörigen Flächen an dem Bremssattel 4 für eine Verdrehsicherung im eingebauten Zustand der Verschleißnachstellvorrichtung 10 zusammenwirkt (siehe Fig. 19).

Ein weiterer Unterschied dieser Variante nach Fig. 15 zu der Ausführung nach Fig. 13 liegt darin, dass die Abtriebsschnittstelle 20c mit axialen Abtriebszungen 20l mit axialen Abtriebskanten 20m und mit zwischen den Abtriebszungen 20l liegenden axialen Ausnehmungen ausgebildet ist. Das zugehörige angepasste Ende der Nachstellwelle 5a ist nicht gezeigt, aber leicht vorstellbar. Es ist mit Axialnuten versehen, in welche die Abtriebszungen 20l eingeschoben werden, wenn die Verschleißnachstellvorrichtung 10 auf die Nachstellwelle 5a aufgesetzt wird.

Der Aufbau der Funktionsbauteile der Variante nach Fig. 15 der Verschleißnachstellvorrichtung 10 in dem Gehäuse 11 entspricht dem Aufbau, der im Zusammenhang mit Fig. 13 beschrieben ist.

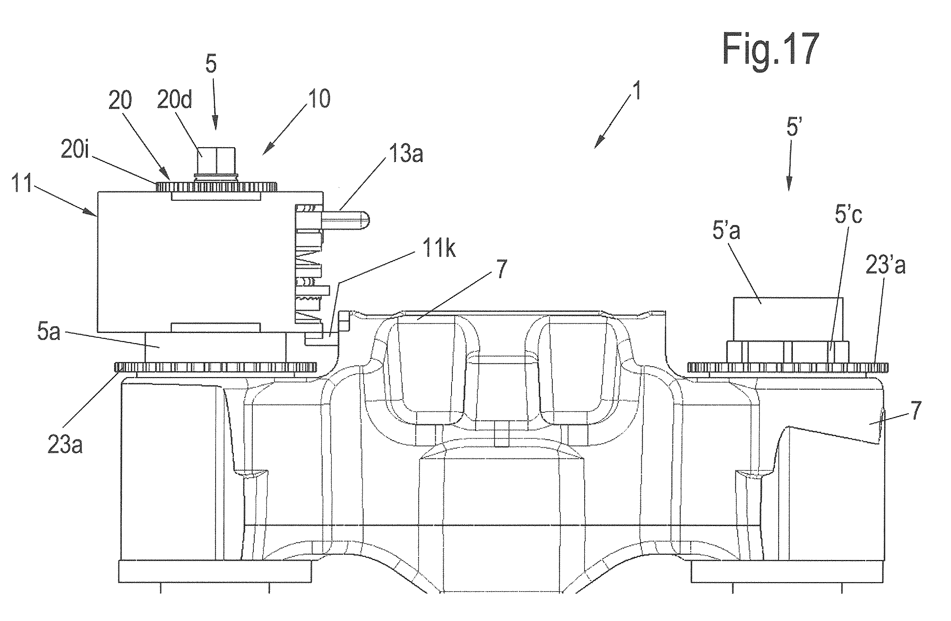

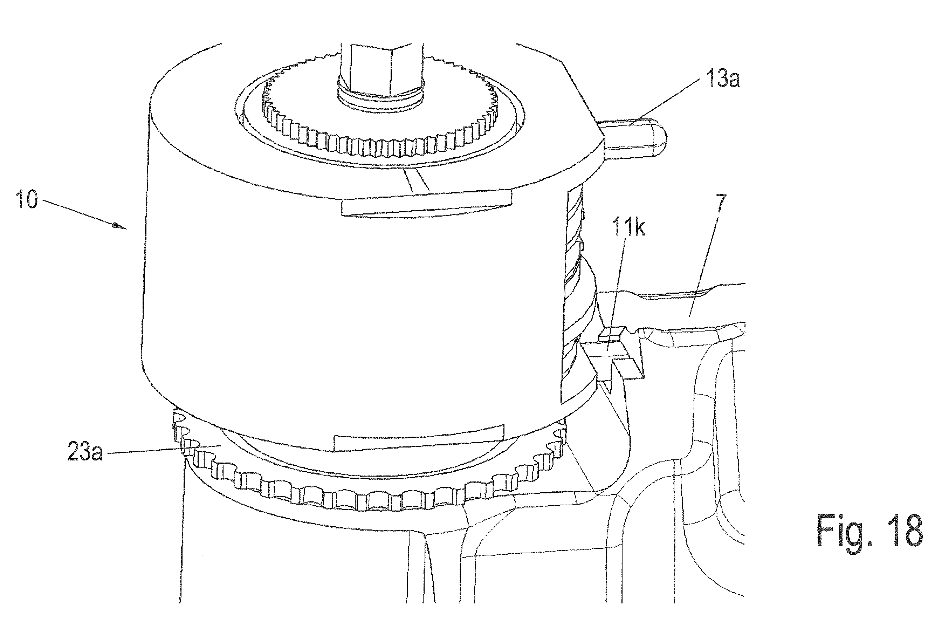

In Fig. 17 ist eine schematische Teilansicht eines zweiten Ausführungsbeispiels der erfindungsgemäßen Scheibenbremse 1 gezeigt, und Fig. 18 zeigt eine vergrößerte Perspektivansicht der erfindungsgemäßen Verschleißnachstellvorrichtung 10 nach Fig. 13 an der Scheibenbremse 1 nach Fig. 17. In diesem zweiten Ausführungsbeispiel ist die Verschleißnachstellvorrichtung 10 nicht in der Spindeleinheit 5 eingesetzt, sondern auf dem Ende der Nachstellwelle 5a der Spindeleinheit 5 aufgesetzt. Die Verschleißnachstellvorrichtung 10 in der Ausführung nach Fig. 13 ist auf das Ende der Nachstellwelle 5a aufgesetzt und das Verdrehfixierelement 11 k in der Traverse 7 aufgenommen. Die Nachstellwelle 5a weist ein Kettenrad als Synchronrad 23a auf. Weiterhin ist das Ende der Mitnehmerwelle 5'a mit dem Synchronrad 23'a und Axialnuten 5'c für die Abtriebselemente 20k gezeigt. Die Die Verschleißnachstellvorrichtung 10 kann sowohl auf die Nachstellwelle 5a als auch auf die Mitnehmerwelle 5'a aufgesetzt werden. Anstelle von Kettenrädern als Synchronräder 23a, 23'a können natürlich auch z.B. andere Zahnräder (Stirnräder, Kegelräder u.dgl.) zur Anwendung kommen.

Schließlich ist in Fig. 19 eine vergrößerte Perspektivansicht der erfindungsgemäßen Verschleißnachstellvorrichtung 10 in der Variante nach Fig. 15 an der Scheibenbremse 1 nach Fig. 17 angebaut dargestellt. Die Abtriebszungen 20l der Abtriebsschnittstelle 20c der Verschleißnachstellvorrichtung 10 greifen in Axialnuten eines Profils 5b des Endes der Nachstellwelle 5a ein. Die Sattelverdrehfixierung 11 g bildet eine Verdrehsicherung der Verschleißnachstellvorrichtung 10.

Weiterhin ist in Fig. 19 der Antrieb 9 beispielhaft dargestellt. Die Schaltnase 16a steht in Eingriff mit dem Betätiger 8a, welcher hier als Nut in einem mit dem Drehhebel 8 verbundenen Körper 8b ausgeführt ist. Mit der Nut des Betätigers 8a kann z.B. das konstruktive Lüftspiel festgelegt sein.

Mit der beschriebenen erfindungsgemäßen Verschleißnachstellvorrichtung 10 können folgende Funktionsbereiche realisiert werden, die im Folgenden erläutert werden.
1. Nominallüftspieleinstellung
2. Lüftspielnachstellung
3. Überlastfall
4. Servicefall
5. Sonstiges

### 1. Nominallüftspieleinstellung

Das Nominallüftspiel entspricht dem konstruktiven Lüftspiel, und wird über die Schaltnase 13a an der Überlastrampenlaufbahn 13c und einem zugehörigen konstruktiv eingestellten Spiel zum Betätiger 8a realisiert (siehe auch Fig. 14 und 19), worauf hier nicht weiter eingegangen werden soll. Eine Funktionsweise dabei ist dergestalt, dass innerhalb des konstruktiven Lüftspiels bis zu einem bestimmten Betätigungswinkel des Betätigers 8a der Nachstellmechanismus der Verschleißnachstellvorrichtung 10 nicht angetrieben wird.

### 2. Lüftspielnachstellung

Im Betriebsfall, wenn das vorhandene Lüftspiel größer als das Nominallüftspiel ist, kommt es nach Überbrückung des konstruktiven Lüftspiels zu einem Nachstellvorgang. Dabei wird das Antriebselement 13 über die Schaltnase 13a von dem Betätiger 8a angetrieben und in Zustellrichtung verdreht. Unter Zustellrichtung ist hier die Drehrichtung zu verstehen, welche notwendig ist, um die Bremsbeläge 3 auf die Bremsscheibe 2 hin zu verstellen. Im Zusammenhang mit Fig. 11 und 11 a ist hier die Zustellrichtung die Drehrichtung im Uhrzeigersinn.

Über die Überlastrampenkugeln 14 besteht ein Formschluss zum Überlastrampenelement 16, von diesem ein Formschluss zur Überlastfedereinheit 17, von dieser ein Formschluss zum Radialfreilauf 18, von diesem durch Sperrung des Radialfreilaufs 18 über die Freilauffedern 8b, die mit der Freilaufverzahnung 20h der Zentralwelle 20 einen Formschluss bilden, zur Zentralwelle 20, und von dieser über die Abtriebsschnittstelle 20c ein Formschluss zur Nachstellwelle 5a bzw. Gewindespindel 6.

An der Zentralwelle 20 befinden sich die Momentenrampen des Momentenrampenabschnitts 20g, welche gegen die zum Gehäuse 11 über Verdrehsicherungselemente 11j und Sicherungsnuten 21 c verdrehgesicherte Momentenrampenscheibe 21 und die Zustellmomentenfeder 22 arbeiten. Die Momentenrampenscheibe 21 weist zwei Rampen mit voneinander verschiedenen Steigungen auf, wie Fig. 12 darstellt. Dies sind die Zustellrampen 21 e und die Verstellrampe 21 d, welche auch als Servicerampe bezeichnet werden kann. Diese Rampen erzeugen durch die Vorspannung der Zustellmomentenfeder 22 ein richtungsabhängiges Drehmoment. Bei Drehung in Zustellrichtung (in Fig. 12 bewegt sich dann der Momentenrampenabschnitt 20g nach links, wobei die Momentenrampenscheibe 21 fixiert ist) wird die Momentenrampenscheibe 21 durch den Kontakt der Zustellrampe 20g" des Momentenrampenabschnitts 20g über die flache Zustellrampe 21 e axial gegen die Zustellmomentenfeder 22 (in Fig. 12 nach unten) verschoben, für eine bleibende Lüftspielverringerung muss das Zahnprofil in den nächsten Zahn überspringen, wobei ein definierter Drehwinkel und eine definierte Axialverschiebung überwunden werden müssen und das "Zustellmoment" erzeugt wird, welches zwischen Nachstellwelle 5a (Spindel) und Gehäuse 11 wirkt.

Auf diese Weise ist eine richtungsabhängige Drehmomenteinrichtung gebildet, welche den Momentenrampenabschnitt 20g, die Momentenrampenscheibe 21 und die Zustellmomentenfeder 22 aufweist.

Der kleinstmögliche Zustellbetrag wird durch die Teilung der Zähne des Momentenrampenabschnitts 20g auf dem entsprechenden Zahndurchmesser und der verwendeten Gewindesteigung definiert, der Gesamtbetrag der Lüftspielreduzierung ist abhängig vom Schwenkwinkel des Antriebselementes 13 bzw. vom Schwenkwinkel des Betätigungsmechanismus, z.B. des Drehhebels 8 und des Betätigers 8a. Dadurch müssen auf das System wirkende Störgrößen von außen für eine bleibende Lüftspielverringerung das "Zustellmoment" überwinden, welches damit einem "Schwingungssicherungsmoment", das auch als "Rüttelsicherung" bezeichnet werden kann, entspricht.

Beim Entlasten der Scheibenbremse 1 bzw. Zurückschwenken des Antriebselementes 13 in die Ausgangslage bleibt die Lüftspielverringerung durch das Lösen des Radialfreilaufes 18 (siehe Fig. 11 und 11a) erhalten. Die Ausgangsposition ist durch den in das Gehäuse 11 integrierten Anschlag 11 h eindeutig definiert.

### 3. Überlastfall

Ist der Nachstellvorgang beendet oder liegt das Nominelle Lüftspiel vor und liegen die Gewindespindeln 6, 6' an den Bremsbelägen 3 / Bremsbelagträgern 3a an, kommt es beim Aufbringen der Zuspannkraft durch Elastizitäten im Bremssystem zur weiteren Verdrehung des Antriebselementes 13 in Zustellrichtung, die Gewindespindeln sind aber gegen Verdrehung blockiert. Durch den Formschluss der Gewindespindel 6, 6' (bzw. mit dieser gekoppelten Nachstellwelle 5a / Mitnehmerwelle 5'a) mit der Zentralwelle 20 ist die Zentralwelle 20 ebenfalls blockiert.

Das Antriebselement 13 wird jedoch weiter verdreht, wodurch über die Überlastrampenkugeln 14 das Überlastrampenelement 16, die Überlastfedereinheit 17, den Radialfreilauf 18 ein Drehmoment aufgebracht wird, es aber durch den gesperrten Radialfreilauf 18 nicht zu einer Verdrehung kommt. Die Überlastrampenkugeln 14 laufen im Rampenprofil der Überlastrampenlaufbahn 13c des Antriebselementes 13 und des Überlastrampenelementes 16 auf und bewirken eine axiale Verschiebung des Überlastrampenelementes 16 gegen die Überlastfedereinheit 17, welche gestaucht wird.

Beim Lösen der Scheibenbremse 1 bzw. Zurückdrehen des Antriebselementes 13 muss das Radialfreilaufmoment des Radialfreilaufs 18 so groß sein, dass die Überlastrampenkugeln 14 wieder in die Ausgangslage zurückgeschwenkt werden. Durch den integrierten Anschlag 11 h im Gehäuse 11 wird sichergestellt, dass das konstruktive Lüftspiel zwischen Schaltnase 13a und Betätiger 8a eingehalten wird.

### 4. Servicefall

Der Servicefall beinhaltet den Tausch der Bremsbeläge 3, wenn diese verschlissen sind, dabei sind die Gewindespindeln 6, 6' maximal ausgefahren und müssen in die Ausgangslage zurückgestellt werden. Dabei wird an der Verstellschnittstelle 20d der Zentralwelle 20 zur Nachstellerverstellung in Aufstellrichtung (gegen die Zustellrichtung) eine Verdrehung aufgebracht. Da die Zentralwelle 20 über die Abtriebsschnittstelle 20c formschlüssig mit der Gewindespindel 6, 6' (bzw. Nachstellerwelle 5a und Synchroneinrichtung 11 mit der Mitnehmerwelle 5'a) verbunden ist, wird die Drehbewegung direkt auf die Gewindespindeln 6, 6' übertragen.

Dabei wird der Momentenrampenabschnitt 20g der Zentralwelle 20 mit der Verstellrampe 20g' gegen die Verstellrampe 21d (Rampe Service) der Momentenrampenscheibe 21 verdreht (siehe Fig. 12) und die Momentenrampenscheibe 21 axial gegen die Zustellmomentenfeder 22 verschoben, denn die Zentralwelle 20 ist in dem Gehäuse 11 über den Führungsabschnitt 20e in der Führungsnut 11i axial fixiert. Es wird ein "Rückstellmoment Rampe" erzeugt.

Über den blockierten Radialfreilauf 18, den Formschluss zur Überlastfedereinheit 17 und den Formschluss zum Überlastrampenelement 16 wird die Verdrehung der Zentralwelle 20 auf die Überlastrampenkugeln 14 übertragen. Das Antriebselement 13 ist in Aufstellrichtung über den integrierten Anschlag 11 h des Gehäuses 11 gegen Verdrehung gesperrt, die Überlastrampenkugeln 14 laufen auf das Rampenprofil der Überlastrampenlaufbahn 13c des Antriebselementes 13 und der Überlastrampenlaufbahn 16a des Überlastrampenelementes 16 auf und verschieben das Überlastrampenelement 16 axial gegen die Überlastfedereinheit 17, ein "Rückstellmoment Überlast" wird erzeugt.

Die Summe der beiden Drehmomente "Rückstellmoment Rampe" und "Rückstellmoment Überlast" ergeben das "Servicemoment", welches zum Zurückstellen des Systems (über die Verstell- bzw. Service-Schnittstelle 20d) überwunden werden muss.

### 5. Sonstiges

Die Überlastrampenkugeln 14 sind mittels des Kugelkäfigs 15 zwangsgeführt, um einen Gleichlauf der Überlastrampenkugeln 14 unter verschiedenen Lastfällen zu gewährleisten.

Der Radialfreilauf 18 besteht aus radial gestapelten Federarmen, um in Sperrrichtung eine gegenseitige Abstützung zu erzielen. Die Gegenkontur an der Zentralwelle 20 ist als Freilaufverzahnung 20h ausgeführt, worin sich in Sperrrichtung die Federarme abstützen und in Löserichtung ein definiertes Freilaufmoment eingestellt wird.

An der Zentralwelle 20 unterhalb der Verstellschnittstelle 20d (Sechskantzapfen) ist die Dichtringnut 20j eingebracht, in die je nach Ausführungsart ein O-Ring oder eine Membran montiert werden kann.

An der Zentralwelle 20 ist eine Verzahnung als Sensorverzahnung 20i für einen Verschleißpotentiometerabgriff angebracht, worüber der Verschleiß z.B. mittels eines Drehwinkelsensors axial versetzt zur Nachstellerwirklinie erfasst werden kann. Der Durchmesser der Sensorverzahnung 20i ist an ein Verschleißsensorplanetengetriebe angepasst.

Die Verschleißnachstellvorrichtung ist als Rampenverschleißnachsteller in erster Linie für die Verschleißnachstellung für pneumatisch zugespannte Scheibenbremsen im Nutzfahrzeugbereich gestaltet, kann jedoch auch bei allen anderen Anwendungen, wo Verschleißausgleich notwendig ist, zum Einsatz kommen.

Die Verschleißnachstellvorrichtung 10 kann sowohl in Außenbauweise als auch in Innenbauweise ausgebildet sein. Unter Außenbauweise ist zu verstehen, dass die Verschleißnachstellvorrichtung 10 um eine Gewindespindel 6, 6' einer Spindeleinheit 5, 5' herum oder auf sie aufsetzbar ist. Mit Innenbauweise ist gemeint, dass die Verschleißnachstellvorrichtung 10 in eine Spindeleinheit 5, 5' z.B. in eine Gewindespindel 6, 6' wie im ersten Ausführungsbeispiel der Scheibenbremse 1 nach Fig. 1 einsetzbar ist.

Die oben beschriebenen Ausführungsbeispiele beschränken die Erfindung nicht, welche im Rahmen der beigefügten Ansprüche modifizierbar ist.

So ist es z.B. denkbar, dass anstelle der beschriebenen Tellerfedersysteme (Überlastfedereinheit 17 und Zustellmomentenfeder 22) auch Druckfedersysteme, Elastomersysteme oder Variationen zum Einsatz kommen können.

Die beschriebenen Rampensysteme in der Überlastrampenlaufbahnen 13c und 16a sind in der Rampenlaufbahnausgestaltung und Anzahl von Einsenkungen frei variierbar.

Die Steigungen und Teilungen der beschriebenen Momentenrampen 20g', 20g" des Momentenrampenabschnitts 20g der Zentralwelle 20 und die Verstellrampen 21 d und Zustellrampen 21 e der Momentenrampen 21 a sind frei variierbar.

Anstelle des beschriebenen Radialfreilaufs 18 können alle Freilaufsysteme zum Einsatz kommen, die von axialen Kräften entkoppelt sind.

Die Ausführung der Abtriebsschnittstelle 20c der Zentralwelle 20 zur Gewindespindel 6, 6' (bzw. Nachstellerwelle 5a, Mitnehmerwelle 5'a) ist in Form und Ausgestaltung frei variierbar.

Die Fixierungen 11g und 11 k des Gehäuses 11 sind in Form und Ausgestaltung frei variierbar.

Die Verdrehfixierungen (Verdrehsicherungselement 11j, Federfixiernuten 16b, Paketverbindung 17c, Fixiervorsprung 17d, Sicherungsnut 21 c) sind in Form und Ausgestaltung frei variierbar.

### Bezugszeichenliste

- 1: Scheibenbremse
- 2: Bremsscheibe
- 3: Bremsbelag
- 3a: Bremsbelagträger
- 4: Bremssattel
- 5, 5': Spindeleinheit
- 5a: Nachstellerwelle
- 5'a: Mitnehmerwelle
- 5b: Profil
- 5'c: Axialnut
- 6, 6': Gewinderohr
- 6a, 6'a: Druckstück
- 7: Traverse
- 8: Drehhebel
- 8a: Betätiger
- 8b: Körper
- 9: Antrieb
- 10: Nachstelleinrichtung
- 11: Gehäuse
- 11a: Wand
- 11b, 11c: Öffnung
- 11d: Deckelabschnitt
- 11e: Bodenabschnitt
- 11f: Wandöffnung
- 11g: Sattelverdrehfixierung
- 11h: Anschlag
- 11i: Führungsnut
- 11j: Verdrehsicherungselement
- 11k: Verdrehfixierelement
- 12: Axiallagerkugel
- 13: Antriebselement
- 13a: Schaltnase
- 13b: Axiallagerlaufbahn
- 13c: Überlastrampenlaufbahn
- 14: Überlastrampenkugel
- 15: Kugel käfig
- 16: Überlastrampenelement
- 16a: Überlastrampenlaufbahn
- 16b: Federfixiernut
- 17: Überlastfedereinheit
- 17a, 17b: Feder
- 17c: Paketverbindung
- 17d: Fixiervorsprung
- 18: Radialfreilauf
- 18a: Freilaufaxiallagerlaufbahn
- 18b: Freilauffeder
- 18c: Profilierung
- 18d: Federfixiernut
- 19: Freilaufkugel
- 20: Zentralwelle
- 20a: Antriebsabschnitt
- 20b: Abtriebsabschnitt
- 20c: Abtriebsschnittstelle
- 20d: Verstellschnittstelle
- 20e: Führungsabschnitt
- 20f: Freilaufaxiallagerlaufbahn
- 20g: Momentenrampenabschnitt
- 20g': Verstellrampe
- 20g": Zustellrampe
- 20h: Freilaufverzahnung
- 20i: Sensorverzahnung
- 20j: Dichtringnut
- 20k: Abtriebselement
- 20l: Abrtriebszunge
- 20m: Abtriebskante
- 21: Momentenrampenscheibe
- 21a: Momentenrampe
- 21b: Druckseite
- 21c: Sicherungsnut
- 21d: Verstellrampe
- 21e: Zustellrampe
- 22: Zustellmomentenfeder
- 23: Synchroneinrichtung
- 23a, 23'a: Synchronrad
- 23b: Synchronmittel

## Patentansprüche

1. Verschleißnachstellvorrichtung (10) zur Nachstellung eines Reibflächenverschleißes an Bremsbelag (3) und Bremsscheibe (2) einer Scheibenbremse (1), insbesondere für ein Kraftfahrzeug, mit einer Zuspannvorrichtung, vorzugsweise mit einem Drehhebel (8), wobei die Verschleißnachstellvorrichtung (20) antriebsseitig mit der Zuspannvorrichtung, vorzugsweise mit dem Drehhebel (8), und abtriebsseitig mit einer Spindeleinheit (5, 5') der Scheibenbremse (1) koppelbar ist, wobei
a) axial beiderseits eines Antriebselementes (13) jeweils eine Wälzkörperanordnung angeordnet ist, von denen eine als Wälzlager und eine als Kugelrampenkupplung ausgebildet ist,
b) eine Zentralwelle (20), welche mit der Kugelrampenkupplung gekoppelt ist und eine Abtriebsschnittstelle (20c) zur Kopplung mit der Spindeleinheit (5, 5') aufweist,
**dadurch gekennzeichnet, dass**
c) ein Radialfreilauf (18) mit der Kugelrampenkupplung über eine Überlastfedereinheit (17) und mit der Zentralwelle (20) gekoppelt ist,
d) eine richtungsabhängige Drehmomenteinrichtung (20g, 21, 22), und
e) ein Gehäuse (11), in welchem das Antriebselement (13), die Wälzkörperanordnungen, die Überlastfedereinheit (17), der Radialfreilauf (18), die Zentralwelle (20) und die richtungsabhängige Drehmomenteinrichtung (20g, 21, 22) angeordnet sind, vorgesehen sind.

2. Verschleißnachstellvorrichtung (10) nach Anspruch 1, **dadurch gekennzeichnet, dass** die richtungsabhängige Drehmomenteinrichtung (20g, 21, 22) eine Rüttelsicherung bildet.

3. Verschleißnachstellvorrichtung (10) nach Anspruch 1 oder 2, **dadurch gekennzeichnet, dass** die Verschleißnachstellvorrichtung (10) durch die richtungsabhängige Drehmomenteinrichtung (20g, 21, 22) für eine diskontinuierliche Nachstellung ausgebildet ist.

4. Verschleißnachstellvorrichtung (10) nach einem der vorhergehenden Ansprüche, **dadurch gekennzeichnet, dass** die richtungsabhängige Drehmomenteinrichtung (20g, 21, 22) einen Momentenrampenabschnitt (20g), der mit der Zentralwelle (20) fest verbunden ist, eine Momentenrampenscheibe (21), die mit dem Momentenrampenabschnitt (20g) in Eingriff steht, und eine Zustellmomentenfeder (22) umfasst, welche den Momentenrampenabschnitt (20g) und die Momentenrampenscheibe (21) mit einer vorher festlegbaren axialen Vorspannkraft beaufschlagt.

5. Verschleißnachstellvorrichtung (10) nach Anspruch 4, **dadurch gekennzeichnet, dass** die Zustellmomentenfeder (22) zwischen einem Bodenabschnitt (11e) des Gehäuses (11) und der Momentenrampenscheibe (21) angeordnet ist.

6. Verschleißnachstellvorrichtung (10) nach Anspruch 4 oder 5, **dadurch gekennzeichnet, dass** die richtungsabhängige Drehmomenteinrichtung (20g, 21, 22) zur Nachstellung mit flachen Zustellrampen (20g", 21e) und zur Verstellung im Servicefall mit in Bezug auf die flachen Zustellrampen (20g", 21e) steilen Verstellrampen (20g', 21d) ausgebildet ist, welche zumindest teilweise in Kontakt stehen.

7. Verschleißnachstellvorrichtung (10) nach einem der vorhergehenden Ansprüche, **dadurch gekennzeichnet, dass** das Axiallager aus dem Antriebselement (13), Axiallagerkugeln (12) und einem Deckelabschnitt (11d) des Gehäuses (11) gebildet ist.

8. Verschleißnachstellvorrichtung (10) nach einem der vorhergehenden Ansprüche, **dadurch gekennzeichnet, dass** die Zentralwelle (20) einen Führungsabschnitt (20e) aufweist, welcher in dem Gehäuse (11) axial festgelegt ist.

9. Verschleißnachstellvorrichtung (10) nach Anspruch 8, **dadurch gekennzeichnet, dass** das Axiallager, die Kugelrampenkupplung, die Überlastfedereinheit (17) und der Radialfreilauf (18) zwischen dem Führungsabschnitt (20e) und dem Deckelabschnitt (11 d) des Gehäuses (11) angeordnet sind.

10. Verschleißnachstellvorrichtung (10) nach einem der vorhergehenden Ansprüche, **dadurch gekennzeichnet, dass** der Radialfreilauf (18) als Federpaket ausgebildet ist und mit einer Freilaufverzahnung (20h) der Zentralwelle (20) in Eingriff steht.

11. Verschleißnachstellvorrichtung (10) nach Anspruch 10, **dadurch gekennzeichnet, dass** der Radialfreilauf (18) radial gestapelte Federarme aufweist.

12. Verschleißnachstellvorrichtung (10) nach einem der vorhergehenden Ansprüche, **dadurch gekennzeichnet, dass** das Gehäuse (11) mit mindestens einer Sattelverdrehfixierung (11g) und/oder einem Verdrehfixierelement (11k) ausgebildet ist.

13. Verschleißnachstellvorrichtung (10) nach einem der vorhergehenden Ansprüche, **dadurch gekennzeichnet, dass** Kugelrampenkupplung Überlastrampenkugeln (14) aufweist, die in einem Kugelkäfig (15) zwangsgeführt sind und zwischen dem Antriebselement (13) und einem Überlastrampenelement (16) angeordnet sind.

14. Scheibenbremse (1), vorzugsweise druckluftbetätigt, insbesondere für ein Kraftfahrzeug, mit einer Zuspannvorrichtung, vorzugsweise mit einem Bremsdrehhebel (8), mindestens einer Spindeleinheit (5, 5'), und mindestens einer Verschleißnachstellvorrichtung (10), welche mit der Zuspannvorrichtung, vorzugsweise mit dem Bremsdrehhebel (9), gekoppelt ist,
**dadurch gekennzeichnet,**
**dass** die Verschleißnachstellvorrichtung (10) nach einem der vorhergehenden Ansprüche ausgebildet ist.

15. Scheibenbremse (1) nach Anspruch 14, weiterhin aufweisend zwei Spindeleinheiten (5, 5') und eine Synchroneinheit (11), **dadurch gekennzeichnet, dass** die Verschleißnachstellvorrichtung (10) auf oder in die eine der beiden Spindeleinheiten (5, 5') der Scheibenbremse (1) eingesetzt ist.

## Claims

1. Wear adjustment device (10) for adjusting friction face wear on the brake lining (3) and the brake disc (2) of a disc brake (1), in particular for a motor vehicle, having a brake application device, preferably with a rotary lever (8), it being possible for the wear adjustment device (20) to be coupled on the drive side to the brake application device, preferably to the rotary lever (8), and on the output side to a spindle unit (5, 5') of the disc brake (1), wherein
a) in each case one rolling body arrangement is arranged axially on both sides of a drive element (13), of which rolling body arrangements one is configured as an anti-friction bearing and one is configured as a ball ramp coupling,
b) a central shaft (20) which is coupled to the ball ramp coupling and has an output interface (20c) for coupling to the spindle unit (5, 5'), **characterised in that**
c) a radial freewheel (18) is coupled to the ball ramp coupling via an overload spring unit (17) and to the central shaft (20),
d) a direction-dependent torque device (20g, 21, 22), and
e) a housing (11), in which the drive element (13), the rolling body arrangements, the overload spring unit (17), the radial freewheel (18), the central shaft (20) and the direction-dependent torque device (20g, 21, 22) are arranged, are provided.

2. Wear adjustment device (10) according to claim 1, **characterised in that** the direction-dependent torque device (20g, 21, 22) forms a vibration protection means.

3. Wear adjustment device (10) according to claim 1 or 2, **characterised in that** the wear adjustment device (10) is configured by way of the direction-dependent torque device (20g, 21, 22) for discontinuous adjustment.

4. Wear adjustment device (10) according to one of the preceding claims, **characterised in that** the direction-dependent torque device (20g, 21, 22) comprises a moment ramp section (20g) which is fixedly connected to the central shaft (20), a moment ramp disc (21) which is in engagement with the moment ramp section (20g) and an application moment spring (22) which loads the moment ramp section (20g) and the moment ramp disc (21) with an axial prestressing force which can be fixed in advance.

5. Wear adjustment device (10) according to claim 4, **characterised in that** the application moment spring (22) is arranged between a bottom section (11 e) of the housing (11) and the moment ramp disc (21).

6. Wear adjustment device (10) according to claim 4 or 5, **characterised in that** the direction-dependent torque device (20g, 21, 22) is configured with flat application ramps (20g", 21 e) for adjustment and with adjusting ramps (20g', 21 d) which are steep in relation to the flat application ramps (20g", 21e) for adjustment in the case of servicing, which ramps are at least partially in contact.

7. Wear adjustment device (10) according to one of the preceding claims, **characterised in that** the axial bearing is formed from the drive element (13), axial bearing balls (12) and a cover section (11d) of the housing (11).

8. Wear adjustment device (10) according to one of the preceding claims, **characterised in that** the central shaft (20) has a guide section (20e) which is fixed axially in the housing (11).

9. Wear adjustment device (10) according to claim 8, **characterised in that** the axial bearing, the ball ramp coupling, the overload spring unit (17) and the radial freewheel (18) are arranged between the guide section (20e) and the cover section (11d) of the housing (11).

10. Wear adjustment device (10) according to one of the preceding claims, **characterised in that** the radial freewheel (18) is configured as a spring assembly and is in engagement with a freewheel toothing system (20h) of the central shaft (20).

11. Wear adjustment device (10) according to claim 10, **characterised in that** the radial freewheel (18) has radially stacked spring arms.

12. Wear adjustment device (10) according to one of the preceding claims, **characterised in that** the housing (11) is configured with at least one calliper anti-twist fixing means (11 g) and/or one anti-twist fixing element (11k).

13. Wear adjustment device (10) according to one of the preceding claims, **characterised in that** the ball ramp coupling has overload ramp balls (14) which are positively guided in a ball cage (15) and are arranged between the drive element (13) and an overload ramp element (16).

14. Disc brake (1), preferably actuated by compressed air, in particular for a motor vehicle, having a brake application device, preferably having a brake rotary lever (8), at least one spindle unit (5, 5') and at least one wear adjustment device (10) which is coupled to the application device, preferably to the brake rotary lever (9),
**characterised in that**
the wear adjustment device (10) is configured according to one of the preceding claims.

15. Disc brake (1) according to claim 14, having, furthermore, two spindle units (5, 5') and a synchronising unit (11), **characterised in that** the wear adjustment device (10) is inserted onto or into one of the two spindle units (5, 5') of the disc brake (1).

## Revendications

1. Dispositif de rattrapage de l'usure (10) pour le rattrapage d'une usure des surfaces de friction à une garniture de frein (3) et un disque de frein (2) d'un frein à disque (1), en particulier pour un véhicule à moteur, comprenant un dispositif d'application, de préférence à un levier rotatif (8), au dispositif de rattrapage de l'usure (20) étant apte à être accouplé, du côté entraînement audit dispositif d'application, de préférence moyennant ledit levier rotatif (8), et, du côté sortie, à une unité à broche (5, 5') dudit frein à disque (1), dans lequel
a) un arrangement respectif des corps roulants est disposé des deux côtés d'un élément d'entraînement en sens axial, dont l'un est configuré sous forme d'un roulement à rouleaux et l'autre sous forme d'une pièce d'accouplement à rampe de billes,
b) un arbre central (20) qui est accouplé à ladite pièce d'accouplement à rampe de billes et doté d'une interface de sortie (20c) pour l'accouplement à ladite unité à broche (5, 5'),
**caractérisé en ce**
**qu'**une roue libre radiale (18) est accouplée à ladite pièce d'accouplement à rampe de billes via une unité à ressort de surcharge (17) et audit arbre central (20),
d) un moyen de couple (20g, 21, 22) en fonction de la direction, et
e) un carter (11) sont disposés, dans lequel ledit élément d'entraînement (13), lesdits arrangements des corps roulants, ladite unité à ressort de surcharge (17), ladite roue libre radiale (18), ledit arbre central (20) et ledit moyen de couple (20g, 21, 22) en fonction de la direction sont disposés.

2. Dispositif de rattrapage de l'usure (10) selon la revendication 1, **caractérisé en ce que** ledit moyen de couple (20g, 21, 22) en fonction de la direction constitue un moyen protecteur contre les vibrations.

3. Dispositif de rattrapage de l'usure (10) selon la revendication 1 ou 2, **caractérisé en ce que** le dispositif de rattrapage de l'usure (10) est configuré pour un rattrapage en discontinu moyennant ledit moyen de couple (20g, 21, 22) en fonction de la direction.

4. Dispositif de rattrapage de l'usure (10) selon une quelconque des revendications précédentes, **caractérisé en ce que** ledit moyen de couple (20g, 21, 22) en fonction de la direction comprend une section de rampe à couple (20g), qui est fixé audit arbre central (20), un disque de rampe à couple (21), qui se trouve en prise dans ladite section de rampe à couple (20g), et un ressort à rampe d'avance (22), qui agit sur ladite section de rampe à couple et ladite disque à rampe de couple (21) à une force de précontrainte axiale qu'on peut déterminer auparavant.

5. Dispositif de rattrapage de l'usure (10) selon la revendication 4, **caractérisé en ce que** ledit ressort de couple d'application (22) est disposé entre une partie de fond (11e) dudit carter (11) et ledit disque de rampe à couple (21).

6. Dispositif de rattrapage de l'usure (10) selon la revendication 4 ou 5, **caractérisé en ce que** ledit moyen de couple en fonction de direction (20g, 21, 22) est configuré aux rampes d'application plates (20g", 21e) pour l'ajustement et aux rampes d'ajustement (20g', 21 d) pour l'ajustement au cas de service, qui sont raides par rapport auxdites rampes d'application plates (20g", 21e), auxdites rampes d'ajustement se trouvant en contact au moins en partie.

7. Dispositif de rattrapage de l'usure (10) selon une quelconque des revendications précédentes, **caractérisé en ce que** ledit roulement axial est constitué par ledit élément d'entraînement (13), des billes (12) de roulement axial et une partie de couvercle (11d) dudit carter (11).

8. Dispositif de rattrapage de l'usure (10) selon une quelconque des revendications précédentes, **caractérisé en ce que** ledit arbre central (20) comprend une partie de guidage (20e), qui est axialement fixé dans ledit carter (11).

9. Dispositif de rattrapage de l'usure (10) selon la revendication 8, **caractérisé en ce que** ledit roulement axial, ladite pièce d'accouplement à rampe à billes, l'unité à ressort de surcharge (17) et ladite roue libre radiale (18) sont disposés entre ladite partie de guidage (20e) et ladite partie de couvercle (11d) dudit carter (11).

10. Dispositif de rattrapage de l'usure (10) selon une quelconque des revendications précédentes, **caractérisé en ce que** ladite roue libre radiale (18) est conçue sous forme d'un ensemble de ressorts et se trouve en prise dans une denture de la roue libre (20h) dudit arbre central (20).

11. Dispositif de rattrapage de l'usure (10) selon la revendication 10, **caractérisé en ce que** ladite roue libre radiale (18) comprend des bras de ressort empilés en sens radial.

12. Dispositif de rattrapage de l'usure (10) selon une quelconque des revendications précédentes, **caractérisé en ce que** ledit carter (11) est muni d'au moins une fixation contre une rotation d'étrier (11 g) et/ou d'un élément de fixation contre la rotation (11 k).

13. Dispositif de rattrapage de l'usure (10) selon une quelconque des revendications précédentes, **caractérisé en ce que** ladite unité d'accouplement à rampe à billes comprend des billes de rampe de surcharge (14), qui subissent un mouvement forcé dans une cage de rétention (15) et qui sont disposés entre ledit élément d'entraînement (13) et un élément à rampe de surcharge (16).

14. Frein à disque (1), de préférence à commande par air comprimé, en particulier pour un véhicule à moteur, comprenant un dispositif d'application, de préférence à un levier rotatif de freinage (8), à au moins une unité à broche (5, 5') et à moins un dispositif de rattrapage de l'usure (10), qui est accouplé audit dispositif d'application, de préférence audit levier rotatif de freinage (9),
**caractérisé en ce que** ledit dispositif de rattrapage de l'usure (10) est configuré selon une quelconque des revendications précédentes.

15. Frein à disque (1) selon la revendication 14, comprenant au plus deux unités à broche (5, 5') et une unité de synchronisation (11), **caractérisé en ce que** ledit dispositif de rattrapage de l'usure (10) est placé sur ou dans l'une desdites deux unités à broche (5, 5') du frein à disque (1).
